# EUROPEAN PATENT APPLICATION

(11) **EP 4 492 758 A1**
(43) Date of publication of application: **15.01.2025**
(21) Application number: 23212822.3
(22) Date of filing: 28.11.2023
(51) Int. Cl.: H04L 69/164, H04L 9/40

(54) **ENCRYPTION ACCELERATION FOR NETWORK COMMUNICATION PACKETS**

(30) Priority: 13.07.2023 WO PCT/CN2023/107286; 24.08.2023 US 202318237754
(71) Applicant: INTEL Corporation, Santa Clara, CA 95054 (US)
(72) Inventor: YU, Ping, Shanghai, 200241 (CN); KANTECKI, Tomasz, Ennis, Co. Clare, V95C8C0 (IE); DOU, Chao, Shanghai, 200081 (CN); GUARCH, Pablo De Lara, Shannon CE, V14 AN23 (IE); WILL, Brian, Phoenix, 85048 (US)
(74) Representative: Rummler, Felix

(57) **Abstract**

An apparatus includes an interface to memory, and a processor to execute one or more instructions. The instructions cause the processor to receive, via an application programming interface (API), a plurality of packets, respective packets of the plurality of packets comprising a respective header and a respective payload. Further, the instructions cause the processor to determine, by a QUIC protocol stack, to encrypt the plurality of packets in parallel. Further, the instructions cause the processor to encrypt the payloads of the plurality of packets in parallel. Further, the instructions cause the processor to encrypt the headers of the plurality of packets in parallel.

## Description

### CROSS-REFERENCE TO RELATED APPLICATIONS

This application claims the benefit of and priority to previously filed International Application No. PCT/CN2023/107286 entitled "ENCRYPTION ACCELERATION FOR NETWORK COMMUNICATION PACKETS" filed July 13, 2023, which is hereby incorporated by reference in its entirety.

### BACKGROUND

Modern computing devices may include general-purpose processor cores as well as a variety of hardware accelerators for performing specialized tasks. Certain computing devices may include one or more accelerators embodied as field programmable gate arrays (FPGAs), which may include programmable digital logic resources that may be configured by the end-user or system integrator.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an aspect of the subject matter in accordance with one embodiment.
FIG. 2 illustrates an aspect of the subject matter in accordance with one embodiment.
FIG. 3 illustrates an aspect of the subject matter in accordance with one embodiment.
FIG. 4 illustrates an aspect of the subject matter in accordance with one embodiment.
FIG. 5 illustrates an aspect of the subject matter in accordance with one embodiment.
FIG. 6 illustrates an aspect of the subject matter in accordance with one embodiment.
FIG. 7 illustrates an aspect of the subject matter in accordance with one embodiment.
FIG. 8 illustrates an aspect of the subject matter in accordance with one embodiment.

### DETAILED DESCRIPTION

Embodiments disclosed address technical challenges regarding communication networks ("networks"). Communication protocols, such as the Transmission Control Protocol (TCP), define requirements for an end-to-end connection across a network. QUIC is a recently developed transport layer networking protocol as an alternative to TCP. QUIC supports a set of multiplexed connections over the User Datagram Protocol (UDP). QUIC connections can provide performance improvements over TCP for applications that are connection-oriented, e.g., web applications. The improvements can include a reduction in the number of exchanges when establishing a new connection, such as for the handshake, encryption setup, and initial data requests, thus reducing latency. The QUIC protocol may facilitate several other improvements to networks, such as stream-multiplexing.

Embodiments described herein offload one or more processes to hardware when communicating using the QUIC transport layer protocol. In some examples, receive side scaling (RSS), large send offload (LSO), receive segment coalescing (RSC), and crypto (encryption/decryption) offload are performed in hardware for QUIC communications. As a result of offloading tasks, including to different processors, a software control complexity and processing burden (such as for individual processors) is reduced. In some embodiments, bulk encryption/decryption can be performed using AVX512 and VAES, VPCLMULQDQ instruction extensions.

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to effect such feature, structure, or characteristic in connection with other embodiments, whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

Reference is now made to the drawings, wherein like reference numerals are used to refer to like elements throughout. In the following description, for purposes of explanation, numerous specific details are set forth in order to provide a thorough understanding thereof. However, novel embodiments can be practiced without these specific details. In other instances, well-known structures and devices are shown in block diagram form in order to facilitate a description thereof. The intention is to cover all modifications, equivalents, and alternatives consistent with the claimed subject matter.

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the Figures and the accompanying description, the designations "a," "b," and "c" (and similar designators) are intended to be variables representing any positive integer. Thus, for example, if an implementation sets a value for a = 5, then a complete set of components 121 illustrated as components 121-1 through 121-a may include components 121-1, 121-2, 121-3, 121-4, and 121-5. The embodiments are not limited in this context.

Operations for the disclosed embodiments may be further described with reference to the following figures. Some of the figures may include a logic flow. Although such figures presented herein may include a particular logic flow, it can be appreciated that the logic flow merely provides an example of how the general functionality as described herein can be implemented. Further, a given logic flow does not necessarily have to be executed in the order presented unless otherwise indicated. Moreover, not all acts illustrated in a logic flow may be required in some embodiments. In addition, the given logic flow may be implemented by a hardware element, a software element executed by a processor, or any combination thereof. The embodiments are not limited in this context.

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such a feature is required in all embodiments and, in some embodiments, may not be included or may be combined with other features.

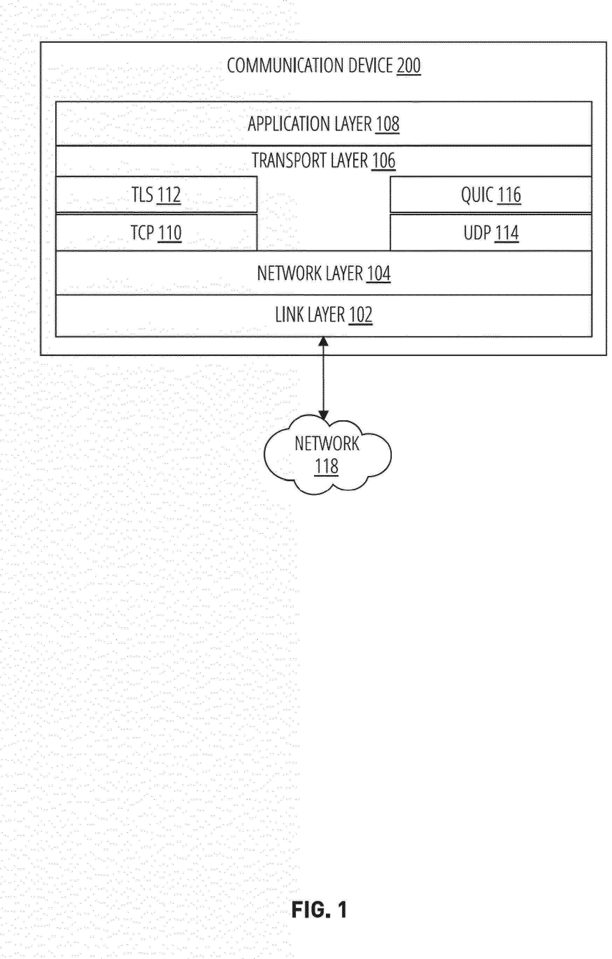

FIG. 1 depicts an example communication device 200 according to one or more embodiments. The communication device 200 includes a link layer 102 that facilitates the communication device 200 to send and receive data over a network 118 using Open Systems Interconnection (OSI) model. The OSI model is a conceptual model that describes how different network protocols can communicate with each other. The model divides the communication process into several layers, each with its own function and responsibility. For example, the layers include a) Physical layer, which deals with the transmission and reception of raw data bits over a physical medium; b) Data link layer, which provides reliable data transfer between two devices on the same network; c) Network layer, which handles routing and forwarding of packets across different networks; d) Transport layer, which ensures end-to-end data integrity and reliability; e) Session layer, which establishes, maintains and terminates sessions between applications; f) Presentation layer, which transforms data into a format that can be understood by the application layer; and g) Application layer, which provides services to the user, such as email, web browsing, file transfer, etc.

While all the OSI layers are not depicted, in FIG. 1, the communication device 200 illustrates a link layer 102 (lowest layer), a network layer 104 (sometimes also referred to as an Internet Protocol (IP) layer) above the link layer 102, a transport layer 106 above the network layer 104, and an application layer 108 above the transport layer 106. The application layer 108 is sometimes referred to as a Hypertext Transfer Protocol (HTTP) layer.

Transport layer 106 can facilitate using Transmission Control Protocol/Internet Protocol (TCP 110), which is a suite of communication protocols used to interconnect communication devices 200 on the network 118, such as the Internet. TCP 110 is also used as a communications protocol in a private computer network (an intranet or extranet). The TCP 110 protocol suite functions as an abstraction layer between internet applications and the routing and switching fabric. TCP 110 specifies how data is exchanged over the Internet by providing end-to-end communications that identify how data should be broken into packets, addressed, transmitted, routed, and received at the destination. The two main protocols in the suite serve specific functions. TCP 110 defines how applications on communication devices 200 can create channels of communication across the network 118. It also manages how a message is assembled into smaller packets before they are then transmitted over the Internet and reassembled in the right order at the destination address. The TCP 110 uses internet protocol (IP) to define how to address and route each packet to make sure the packets reach the right destination. Each gateway computer on the network checks this IP address to determine where to forward a packet. For example, a subnet mask indicates to the communication device 200, or other network devices what portion of the IP address is used to represent the network 118 and what part is used to represent hosts, or other communication devices 200, on the network 118. Common protocols handled by TCP 110 can include Hypertext Transfer Protocol (HTTP), which handles the communication between a web server and a web browser; HTTP Secure, which handles secure communication between a web server and a web browser; and File Transfer Protocol, which handles the transmission of files between communication devices 200. Embodiments herein are not limited to the above protocols.

In some embodiments, the transport layer 106 includes a Transport Layer Security (TLS 112) protocol that adds a layer of security on top of the TCP/IP transport protocols. TLS 112 uses both symmetric encryption and public key encryption for securely sending private data and adds additional security features, such as authentication and message tampering detection. TLS adds more processing when sending data with TCP/IP, so it increases latency in network communications.

In some embodiments, the transport layer 106 uses the QUIC 116 layer instead of the TCP 110 suite of protocols. QUIC 116 provides a user datagram protocol (UDP) based protocol that serves as both the "transport" and "session" layer for the network OSI model. QUIC 116 replaces the TCP 110 and TLS 112 part in the network stack (in the transport layer 106). The reliable components of TCP, like loss recovery, congestion control, connection establishment, etc., are included in QUIC 116, along with the security provided by TLS 112. The connection establishment is improved significantly in QUIC 116, where the TLS handshake establishment and TCP handshake establishment are done by QUIC 116 itself in the transport layer 106, saving latency added by multiple roundtrips. Accordingly, QUIC 116 provides an improvement over the TCP 110-based communications.

The network layers in one embodiment are provided in accordance with a UDP 114 suite utilizing the QUIC 116 transport layer protocol. The application layer 108 provides process-to-process communication between processes running on different hosts (e.g., general-purpose computing devices, servers, etc.) connected to the network 118, such as the communication device 200. The transport layer 106 provides end-to-end communication between different hosts, including providing end-to-end connections(s) between hosts for use by the processes. The network layer 104 provides routing (e.g., communication between different individual portions of the network 118) via routers. The link layer 102 provides communication between physical network addresses, such as Medium Access Control (MAC) addresses of adjacent nodes in the network 118, such as for the same individual network via network switches and/or hubs, which operate at the link layer 102.

In one example, the communication device 200 uses QUIC 116 to establish a channel (application-layer channel) at the application layer 108 of the network 118. The channel is established between instances of applications or processes running on distinct communication devices 200. For example, the channel is a process-to-process channel between the client instances on two (or more) communication devices 200.

The (application-layer) channel, in some examples, is established via one or more transport layer channels between the communication devices 200, often referred to as end-to-end or host-to-host channel(s). Each transport layer channel is established via network layer channel(s) between one of the communication devices 200 and a router or between pairs of routers, which are established via link layer channels within the individual networks of, for example, the Internet. The channel can be a unidirectional channel or a bidirectional channel.

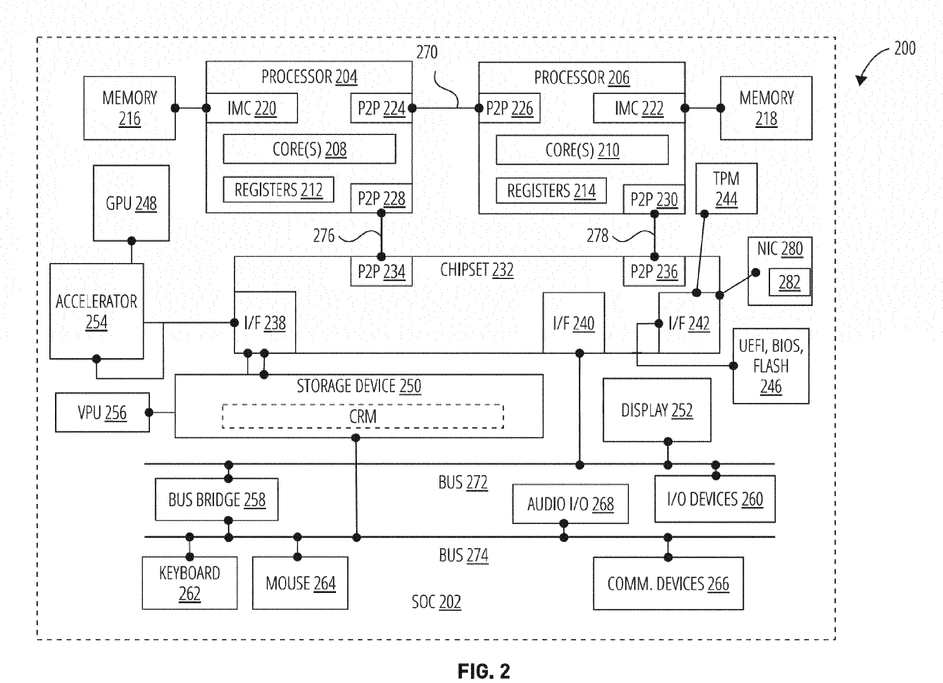

FIG. 2 illustrates an embodiment of a communication device 200. Communication device 200 is a computer system with one or more processor cores, such as a distributed computing system, supercomputer, high-performance computing system, computing cluster, mainframe computer, mini-computer, client-server system, personal computer (PC), workstation, server, portable computer, laptop computer, tablet computer, handheld devices such as a personal digital assistant (PDA), an Infrastructure Processing Unit (IPU), a data processing unit (DPU), or other devices for processing, displaying, or transmitting the information. Similar embodiments may comprise, e.g., entertainment devices such as a portable music player or a portable video player, a smartphone or other cellular phone, a telephone, a digital video camera, a digital still camera, an external storage device, or the like. Further embodiments implement larger-scale server configurations. Examples of IPUs include the Intel^{®} IPU and the AMD^{®} Pensando IPU. Examples of DPUs include the Intel DPU, the Fungible DPU, the Marvell^{®} OCTEON and ARMADA DPUs, the NVIDIA BlueField^{®} DPU, and the AMD^{®} Pensando DPU. In other embodiments, the communication device 200 may have a single processor with one core or more than one processor. Note that the term "processor" refers to a processor with a single core or a processor package with multiple processor cores. In at least one embodiment, the communication device 200 is representative of the components of a system to encrypt network packets for the QUIC protocol. More generally, the computing communication device 200 is configured to implement all logic, systems, logic flows, methods, apparatuses, and functionality described herein with reference to the figures herein.

As used in this application, the terms "system," "component," and "module" are intended to refer to a computer-related entity, either hardware, a combination of hardware and software, software, or software in execution, examples of which are provided by the exemplary communication device 200. For example, a component can be but is not limited to being, a process running on a processor, a processor, a hard disk drive, multiple storage drives (of optical and/or magnetic storage medium), an object, an executable, a thread of execution, a program, and/or a computer. By way of illustration, both an application running on a server and the server can be a component. One or more components can reside within a process and/or thread of execution, and a component can be localized on one computer and/or distributed between two or more computers. Further, components may be communicatively coupled to each other by various types of communications media to coordinate operations. The coordination may involve the unidirectional or bidirectional exchange of information. For instance, the components may communicate information in the form of signals communicated over the communications media. The information can be implemented as signals allocated to various signal lines. In such allocations, each message is a signal. Further embodiments, however, may alternatively employ data messages. Such data messages may be sent across various connections. Exemplary connections include parallel interfaces, serial interfaces, and bus interfaces.

As shown in FIG. 2, a communication device 200 comprises a system-on-chip (SoC) 202 for mounting platform components. System-on-chip (SoC) 202 is a point-to-point (P2P) interconnect platform that includes a first processor 204 and a second processor 206 coupled via a point-to-point interconnect 270 such as an Ultra Path Interconnect (UPI). In other embodiments, the communication device 200 may be of another bus architecture, such as a multi-drop bus. Furthermore, each of processor 204 and processor 206 may be processor packages with multiple processor cores, including core(s) 208 and core(s) 210, respectively. While the communication device 200 is an example of a two-socket (2S) platform, other embodiments may include more than two sockets or one socket. For example, some embodiments may include a four-socket (4S) platform or an eight-socket (8S) platform. Each socket is a mount for a processor and may have a socket identifier. Note that the term platform may refer to a motherboard with certain components mounted, such as the processor 204 and chipset 232. Some platforms may include additional components, and some platforms may only include sockets to mount the processors and/or the chipset. Furthermore, some platforms may not have sockets (e.g., SoC or the like). Although depicted as an SoC 202, one or more of the components of the SoC 202 may also be included in a single die package, a multi-chip module (MCM), a multi-die package, a chipset, a bridge, and/or an interposer. Therefore, embodiments are not limited to a SoC.

The processor 204 and processor 206 can be any of various commercially available processors, including without limitation an Intel^{®} Celeron^{®}, Core^{®}, Core (2) Duo^{®}, Itanium^{®}, Pentium^{®}, Xeon^{®}, and XScale^{®} processors; AMD^{®} Athlon^{®}, Duron^{®}, and Opteron^{®} processors; ARM^{®} application, embedded and secure processors; IBM^{®} and Motorola^{®} DragonBall^{®} and PowerPC^{®} processors; IBM and Sony^{®} Cell processors; and similar processors. Dual microprocessors, multi-core processors, and other multi-processor architectures may also be employed as the processor 204 and/or processor 206. Additionally, the processor 204 need not be identical to processor 206.

Processor 204 includes an integrated memory controller (IMC) 220 and point-to-point (P2P) interface 224, and P2P interface 228. Similarly, the processor 206 includes an IMC 222 as well as P2P interface 226 and P2P interface 230. IMC 220 and IMC 222 couple processor 204 and processor 206, respectively, to respective memories (e.g., memory 216 and memory 218). Memory 216 and memory 218 may be portions of the main memory (e.g., a dynamic random-access memory (DRAM)) for the platform, such as double data rate type 4 (DDR4) or type 5 (DDR5) synchronous DRAM (SDRAM). In the present embodiment, the memory 216 and the memory 218 locally attach to the respective processors (e.g., processor 204 and processor 206). In other embodiments, the main memory may couple with the processors via a bus and shared memory hub. Processor 204 includes registers 212, and processor 206 includes registers 214.

Communication device 200 includes chipset 232 coupled to processor 204 and processor 206. Furthermore, chipset 232 can be coupled to storage device 250, for example, via an interface (I/F) 238. The I/F 238 may be, for example, a Peripheral Component Interconnect-enhanced (PCIe) interface, a Compute Express Link ^{®} (CXL) interface, or a Universal Chiplet Interconnect Express (UCIe) interface. Storage device 250 can store instructions executable by the circuitry of the communication device 200 (e.g., processor 204, processor 206, GPU 248, accelerator 254, vision processing unit 256, or the like). For example, storage device 250 can store instructions for encrypting network packets in a batch mode, or the like.

Processor 204 couples to the chipset 232 via P2P interface 228 and P2P 234, while processor 206 couples to the chipset 232 via P2P interface 230 and P2P 236. Direct media interface (DMI) 276 and DMI 278 may couple the P2P interface 228 and the P2P 234 and the P2P interface 230 and P2P 236, respectively. DMI 276 and DMI 278 may be a highspeed interconnect that facilitates, e.g., eight Giga Transfers per second (GT/s), such as DMI 3.0. In other embodiments, the processor 204 and processor 206 may interconnect via a bus.

The chipset 232 may comprise a controller hub such as a platform controller hub (PCH). The chipset 232 may include a system clock to perform clocking functions and include interfaces for an I/O bus such as a universal serial bus (USB), peripheral component interconnects (PCIs), CXL interconnects, UCIe interconnects, interface serial peripheral interconnects (SPIs), integrated interconnects (I2Cs), and the like, to facilitate connection of peripheral devices on the platform. In other embodiments, the chipset 232 may comprise more than one controller hub, such as a chipset with a memory controller hub, a graphics controller hub, and an input/output (I/O) controller hub.

In the depicted example, chipset 232 couples with a trusted platform module (TPM) 244 and UEFI, BIOS, and FLASH circuitry 246 via I/F 242. The TPM 244 is a dedicated microcontroller designed to secure hardware by integrating cryptographic keys into devices. The UEFI, BIOS, and FLASH circuitry 246 may provide a pre-boot code.

Furthermore, chipset 232 includes the I/F 238 to couple chipset 232 with a high-performance graphics engine, such as graphics processing circuitry or a graphics processing unit (GPU) 248. In other embodiments, the communication device 200 may include a flexible display interface (FDI) (not shown) between the processor 204 and/or the processor 206 and the chipset 232. The FDI interconnects a graphics processor core in one or more of processor 204 and/or processor 206 with the chipset 232.

The communication device 200 is operable to communicate with wired and wireless devices or entities via the network interface controller (NIC) 280 using the IEEE 802 family of standards, such as wireless devices operatively disposed of in wireless communication (e.g., IEEE 802.11 over-the-air modulation techniques). This includes at least Wi-Fi (or Wireless Fidelity), WiMax, and Bluetooth^{™} wireless technologies, 3G, 4G, LTE wireless technologies, among others. Thus, the communication can be a predefined structure as with a conventional network or simply an ad hoc communication between at least two devices. Wi-Fi networks use radio technologies called IEEE 802.11x (a, b, g, n, ac, ax, etc.) to provide secure, reliable, fast wireless connectivity. A Wi-Fi network can be used to connect computers to each other, to the Internet, and to wired networks (which use IEEE 802.3-related media and functions).

Additionally, accelerator 254 and/or vision processing unit 256 can be coupled to chipset 232 via I/F 238. The accelerator 254 is representative of any type of accelerator device (e.g., a data streaming accelerator, cryptographic accelerator, cryptographic coprocessor, an offload engine, etc.). One example of an accelerator 254 is the Intel^{®} Data Streaming Accelerator (DSA). Another example of an accelerator 254 is the AMD Instinct^{®} accelerator. The accelerator 254 may be a device including circuitry to accelerate copy operations, data encryption, hash value computation, data comparison operations (including a comparison of data in memory 216 and/or memory 218), network communication operations, and/or data compression. For example, the accelerator 254 may be a USB device, PCI device, PCIe device, CXL device, UCIe device, and/or an SPI device. The accelerator 254 can also include circuitry arranged to execute machine learning (ML) related operations (e.g., training, inference, etc.) for ML models. Generally, the accelerator 254 may be specially designed to perform computationally intensive operations, such as hash value computations, comparison operations, cryptographic operations, and/or compression operations, in a manner that is more efficient than when performed by the processor 204 or processor 206. Because the load of the communication device 200 may include hash value computations, comparison operations, cryptographic operations, and/or compression operations, the accelerator 254 can greatly increase the performance of the communication device 200 for these operations.

The accelerator 254 may be embodied as any type of device, such as a coprocessor, application-specific integrated circuit (ASIC), field-programmable gate array (FPGA), functional block, IP core, graphics processing unit (GPU), a processor with specific instruction sets for accelerating one or more operations, or other hardware accelerator of the computing device 200 capable of performing the functions described herein. In some embodiments, the accelerator 254 may be packaged in a discrete package, an add-in card, a chipset, a multi-chip module (e.g., a chiplet, a dielet, etc.), and/or an SoC. Embodiments are not limited in these contexts.

The accelerator 254 may include one or more dedicated work queues and one or more shared work queues (each not pictured). Generally, a shared work queue is configured to store descriptors submitted by multiple software entities. The software may be any type of executable code, such as a process, a thread, an application, a virtual machine, a container, a microservice, etc., that share the accelerator 254. For example, the accelerator 254 may be shared according to the Single Root I/O virtualization (SR-IOV) architecture and/or the Scalable I/O virtualization (S-IOV) architecture. Embodiments are not limited in these contexts. In some embodiments, the software uses an instruction to atomically submit the descriptor to the accelerator 254 via a non-posted write (e.g., a deferred memory write (DMWr)). One example of an instruction that atomically submits a work descriptor to the shared work queue of the accelerator 254 is the ENQCMD command or instruction (which may be referred to as "ENQCMD" herein) supported by the Intel^{®} Instruction Set Architecture (ISA). However, any instruction having a descriptor that includes indications of the operation to be performed, a source virtual address for the descriptor, a destination virtual address for a device-specific register of the shared work queue, virtual addresses of parameters, a virtual address of a completion record, and an identifier of an address space of the submitting process is representative of an instruction that atomically submits a work descriptor to the shared work queue of the accelerator 254. The dedicated work queue may accept job submissions via commands such as the movdir64b instruction.

Various I/O devices 260 and display 252 couple to the bus 272, along with a bus bridge 258, which couples the bus 272 to a second bus 274, and an I/F 240 that connects the bus 272 with the chipset 232. In one embodiment, the second bus 274 may be a low pin count (LPC) bus. Various devices may couple to the second bus 274, including, for example, a keyboard 262, a mouse 264, and communication devices 266.

Furthermore, an audio I/O 268 may couple to second bus 274. Many of the I/O devices 260 and communication devices 266 may reside on the system-on-chip (SoC) 202, while the keyboard 262 and the mouse 264 may be add-on peripherals. In other embodiments, some or all the I/O devices 260 and communication devices 266 are add-on peripherals and do not reside on the system-on-chip (SoC) 202.

With reference to FIG. 2, the communication device 200 in one example includes one or more hardware components configured to perform networking operations offloaded from software, such as RSS, LSO, RSC, and crypto offload for QUIC communications. The communication device 200 may be any type of computing device connected to a network. One or more examples increase the efficiency with which packets communicated over a network using QUIC are processed. Accordingly, in some examples, the communication device 200 is used in applications that require the communication device 200 to send or receive numerous packets over the network, including larger-sized (above a predetermined size) packets. For example, the communication device 200 can be a network server.

The communication device 200, in some examples, is connected to other computers through a physical network link. The physical network link can be any suitable transmission medium, such as copper wire, optical fiber, or, in the case of a wireless network, air.

In the illustrated example, the communication device 200 includes a network interface controller 280 (NIC) configured to send and receive packets over a physical network 118. The specific construction of network interface controller 280 depends on the characteristics of physical network 118. However, the network interface controller 280 is implemented in one example with circuitry as is used in the data transmission technology to transmit and receive packets over a physical network link.

The network interface controller 280, in one example, is a modular unit implemented on a printed circuit board that is coupled to (e.g., inserted in) the communication device 200. However, in some examples, the network interface controller 280 is a logical device that is implemented in circuitry resident on a module that performs functions other than those of network interface controller 280. Thus, the network interface controller 280 can be implemented in hardware, software, or a combination of hardware and software.

In the illustrated example, the network interface controller 280 additionally includes logic that performs processing on network packets to be sent or received over the physical network 118. In one example, this logic is embodied in electronic circuitry on the network interface controller 280 to perform some or all of the offloaded software operations. In some examples, different hardware configurations of the network interface controller 280 are provided separately from the network interface controller 280 to perform the offloaded functions.

The network interface controller 280 includes an integrated circuit 282 and/or other hardware, which contains circuitry to perform the offloaded processing. Additionally, or optionally, the present disclosure contemplates offloading the software functions to other hardware, such as one or more processors 204, accelerator 254, etc. For example, in one example, traffic is spread across the processors 204 and the accelerator 254 with a hashing process that utilizes the connection identifier (CID) from QUIC data and optionally values from the IP address as described in more detail herein. In some examples, the processors 204 and the accelerator 254 form part of the network interface controller 280.

The integrated circuit 282, in some examples, is a programmable logic device, such as one or more field programmable gate arrays, or can be one or more application-specific integrated circuits or other suitable integrated circuits configured to perform a particular offloaded function. As should be appreciated, the processors can be hardware components each configured to perform one or more of the offloaded functions from software. It should be appreciated that the integrated circuit 282 and the processors in some examples, in addition to performing processing on network packets for send and/or receive operations, perform other functions, which may or may not be related to send and/or receive operations.

Once the network interface controller 280 receives a packet (and/or an indication of a packet, such as a memory address, location, identifier, etc.) and performs processing on the packet, the packet can be further processed by the communication device 200, for example, with hardware and/or software components. The processing of network packets depends on the information within a packet or information that is applicable to certain packets. For example, data from the network packet is analyzed to determine one or more fields. Depending on the characteristics of the fields, a further determination is made if the network packet includes a header, such as for Ethernet (ETH), IP, and UDP. Based on the determined characteristics, the payload in the network packet can be further processed. Once the logic within network interface controller 280 or the processors complete processing on a received packet, the packet can be transferred to the other components of the communication device, such as an operating system, an application, a driver, etc., for further processing.

In some embodiments, the network packet is stored in a data buffer, for example, in the memory 216, or a memory allocated to the network interface controller 280. Each successive layer within the network stack then processes the network packet by reading and/or modifying this buffer. As each layer finishes processing, the layer signals the next layer to begin processing. In the illustrated embodiments, the link layer 102 module processes the packet to determine compliance with the requirements of the link layer, the network layer 104 module processes the packet to determine compliance with the requirements of the network protocol layer, the UDP 114 processing module processes the packet to determine compliance with the requirements of UDP, and the QUIC 116 processing module processes the packet to determine compliance with the requirements of QUIC. It should be appreciated that other checks may be performed, such as checking a packet to determine whether the packet has a header indicating that the packet was sent from an IP address that is a permitted source of packets and/or whether the network packet was sent using the QUIC transport protocol. Other similar checks may be performed to determine whether a received packet complies with the requirements of a layered protocol.

In one example, at each phase in the processing, a determination is made whether the packet complies with the requirements of a specific protocol in the layered protocol. If the processing determines that the packet does not comply with the requirements of the protocol, the packet may be discarded. Alternatively, error detection or error recovery steps may be performed. However, if compliance with all protocol layers is validated, the data from the packet may be passed on to an application within the communication device 200 or otherwise utilized.

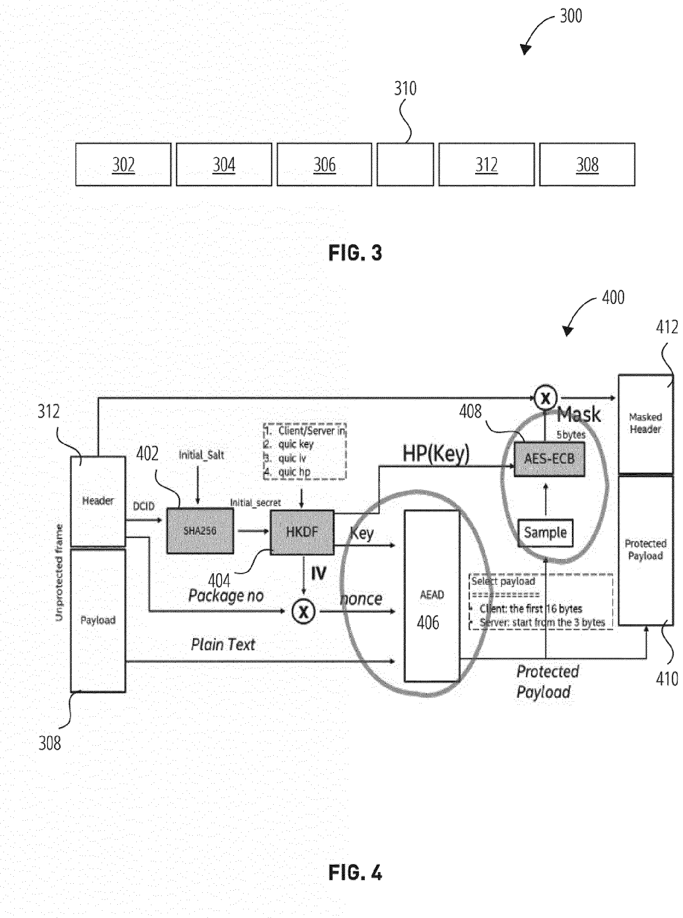

FIG. 3 illustrates an example of a network packet 300 that may be received and stored according to one or more embodiments. The network packet 300 includes fields that store information used for processing the network packet 300. In this example, the network packet 300 includes an Ethernet header 302, an IP header 304, a UDP header 306, and a body defined by a QUIC payload 308. The QUIC payload 308 is encrypted.

Additionally, as shown in the illustrated example, the network packet 300 includes an authenticated data portion, illustrated as a QUIC plaintext 310 (an unencrypted portion), as well as a QUIC header 312. The QUIC plaintext 310 portion is a portion of the QUIC header 312 that is visible to the network 118, while the QUIC payload 308 is not visible to the network. In various embodiments, the QUIC header 312 is unencrypted. The remainder of the network packet 300 is the encrypted QUIC payload 308. Inside the packet QUIC payload 308, there are one or more frames, each with a header and optionally a payload. In various examples, the key used for the encryption depends on the type of packet header (static version specific for 'cleartext' long headers, TLS determined for short headers, and 0-RTT for long headers, etc.).

In some embodiments, information within the network packet 300 is used to perform hardware offloading, which includes having a single call to perform the offloaded functions. In QUIC, encryption is performed at the transport layer, and an example protocol stack is illustrated in FIG. 1, comprising the several layers. In some embodiments, the QUIC 116 layer also includes a TLS 112 layer. As should be appreciated, QUIC 116 makes the application layer 108 layer smaller and subsumes some of the functionality of the application layer 108, (e.g., HTTP, HTTP 2), the TCP 110, and the TLS 112 within the QUIC 116 layer. Some of the functions can include stream multiplexing and prioritization. Moreover, because encryption is performed at the transport layer, the QUIC headers 312 are encrypted as network packets are transmitted across the network 118 using UDP. The QUIC transport protocol thereby provides an end-to-end secure protocol.

Accordingly, in some embodiments, the QUIC protocol runs on top of UDP sockets and, in numerous examples, uses TLS 1.3 for encrypting data. QUIC also uses specific headers and subsumes some parts of HTTP1 and HTTP2. Embodiments described herein facilitate an improved implementation of QUIC to provide TCP-like reliability while supporting 0-RTT and stream multiplexing in a tamper-proof and secure manner.

Unlike some of the other network protocols, QUIC protocol makes the exchange of setup keys and supported protocols part of an initial handshake process. When a client (e.g., communication device 200) opens a connection, the response packet includes the data needed for future packets to use encryption. This eliminates the need to set up the TCP connection and then negotiate the security protocol via additional packets. Other protocols can be serviced in the same way, combining multiple steps into a single request-response. This data can then be used both for following requests in the initial setup as well as future requests that would otherwise be negotiated as separate connections.

During or after the handshake, to make QUIC tamper-proof by middleboxes, from the QUIC level encryption point of view, there are two types of protection operations that are performed in QUIC, packet protection, and header protection. Unlike other protocols, such as TCP, in QUIC, network packets 300 are encrypted individually so that they do not result in the encrypted data waiting for partial packets. Further, the QUIC protocol aims to do the encryption in a single handshake process.

FIG. 4 depicts a QUIC network packet 300 encryption logic 400 according to one or more embodiments. The packet encryption logic 400 includes collecting a packet ID (destination ID (DCID), and/or source ID (SCID)) from the QUIC header 312 and passing it to an SHA-256 module 402 with an initial salt which is publicly available and specific to each QUIC version. The packet number is used in determining the cryptographic nonce for packet encryption. Each endpoint maintains a separate packet number for sending and receiving.

The SHA-256 module 402 gives a value as output called "initial secret." The initial secret is passed to an HMAC Based Key derivation Function (HKDF) module 404 along with the Client/Server in QUIC key, QUIC IV, and QUIC HP. The initial secret key is used by the HKDF module 404 to generate different keys to use in successive stages. The QUIC key, QUIC IV, and QUIC HP are keys used by the HKDF module 404. HKDF is a component of cryptographic systems with the goal of taking some source of initial keying material and deriving from it one or more cryptographically strong secret keys. The nonce is generated from the client_iv and packet number. AEAD uses an initialization vector (IV) as one of the factors (or keys) for encryption. The IV is of a predetermined length, e.g., 16 bytes. In some embodiments, the IV generated by HKDF module 404 is XOR-ed with the packet number retrieved from unprotected QUIC header 312 and used along with the Key from HKDF module 404 to protect QUIC payload 308 part of the network packet 300.

The QUIC plaintext 310 is padded to make it a fixed-length payload (e.g., 1162 bytes). Finally, the fixed-length padded payload is encrypted with AEAD module 406 (e.g., Advanced Encryption Standard (AES), such as AES-128-GCM). Accordingly, AEAD-based encryption is used to protect the QUIC payload 308 and generate a protected payload 410.

After payload protection comes header protection, which is the process in which part of QUIC header 312 is protected with a key that is derived from the protected packet and can only be applied after protecting the payload. Specific parts of the QUIC header 312 that are protected in this process include the packet number and the initial flags byte. The key used in this process is generated by sampling the protected packet based on the packet number length (pn_length) and the HP key generated in the previous stage by the HKDF module 404. Both keys are passed to an AES-ECB module 408 to generate a mask, which will be used to mask specific parts of the QUIC header 312.

In some embodiments, generating the mask includes calculating the packet number length from the flag byte (e.g., the last two bits of the flag byte represent the packet number length). Further, generating the mask includes calculating the sample from the protected packet payload based on the calculated pn_length. Further, from this sample, the mask is calculated with the help of previously calculated hp_key from the HKDF module 404.

Performing the packet and header protection, e.g., AES-ECB encryption, can cost significant latency and compute resources as part of the QUIC protocol processing. As noted herein, unlike the traditional transport layer based on TCP, the QUIC stack is based on the UDP protocol, which uses a datagram payload in packets (L2), and L2 packet size is limited by maximum transmission unit (MTU), thus the unit QUIC transmitted is normally less than one MTU. Typically, the MTU is set to 1500 bytes; however, other values can be configured in one or more embodiments. In computer networking, the MTU is the size of the largest protocol data unit that can be communicated in a single network layer transaction. QUIC protocol requires each network packet 300 to do two rounds of encryption, that is, one total packet level encryption, and one header protection encryption, thus when QUIC needs to send out a portion of data (e.g., a file, a stream, etc.) to the peer, for example, a 1M file, the normal working flow for QUIC is to separate the file into multiple L2 packets, and for each packet to do 2 rounds of encryption, and the crypto size is below the MTU. Further, in some examples, due to the limitation of encryption application programming interfaces (API) in OpenSSL and BoringSSL, QUIC 116 layer has to call the encryption API one by one for multiple network packets 300 belonging to the same session (same key). For example, each buffer that is to be encrypted, a separate API call may be used. One example of an API call is encrypt(buffer, buffer length, key, iv, cipher). In this example, the contents of "buffer" may be encrypted and stored in "cipher." It is understood that other forms of APIs can be used in other embodiments, and the example API call should not be considered limiting of the disclosure. This causes inefficiencies because of (1) the encryption context switch, which is most visible with short packet sizes, and (2) the lack of parallelization in the encryption operations. For example, the encryption context switch can be caused because of crossing a shared library boundary multiple times or using generic encryption API without QUIC-specific encryption parameters (same IV size, same additional authentication data (AAD) size of all packets, etc.).

The technical challenge of performing the two rounds of encryption for each of the multiple packets in such scenarios is further exacerbated because such encryption leads to frequent crypto context switches and inefficient crypto performance due to the relatively small encryption size (limited by the MTU). Embodiments described herein may address such technical challenges by facilitating the acceleration of QUIC protocol encryption using a batch-mode encryption operation. The batch mode encryption may perform multiple encryption operations simultaneously and accelerate the overall QUIC performance. Additionally, embodiments herein can be further enhanced by using features such as AVX512 and vector AES instructions, which are provided by particular hardware, such as from Intel^{®}. Embodiments described herein may achieve significant improvement in QUIC performance.

For example, suppose that the QUIC protocol is being used to send a record (e.g., file, stream, or any type of data) to a peer or host (e.g., communication device 200). The QUIC protocol divides the record into multiple smaller pieces and performs encryption one by one with different IVs but the same key. Such a process is because of the limitation of MTU size. Instead, embodiments herein use vector-based AES (e.g., using the Intel^{®} Architecture) to perform a batch mode encryption operation which allows to provide multiple smaller pieces of plaintext and IV in a batch and use the same key to encrypt the pieces of plaintext in a single run. Such a single run encryption operation reduces the overhead of context switch and power transition (e.g., when using Advanced Vector Extensions (AVX)) and by leveraging specific instruction sets, such as the Intel^{®} VAES instruction set. Accordingly, embodiments herein make smaller encryption operations work in parallel and improve QUIC performance.

Embodiments herein, accordingly, may facilitate resolving a QUIC deployment pain point for performance downgrade compared with TLS. Embodiments herein may improve performance of UDP-based QUIC protocol by leveraging encryption instructions that can offload QUIC protocol operations and/or be performed in a parallel manner. In some embodiments, an API is provided to use the batch mode encryption functions. The APIs can facilitate offloading the batch mode encryption functions. Further, the APIs can be used when completing operations in current encryption libraries, such as OpenSSL. Further, the APIs may be used to support segmentation offloading. For example, data may need to be packetized into a plurality of packets via segmentation offloading. The segmentation offloading may include generating the packets, including headers, which can be encrypted using the APIs for batch mode encryption functions. In one example, the segmentation offloading is TCP segmentation offloading, where smaller TCP segments are generated from a larger portion of data.

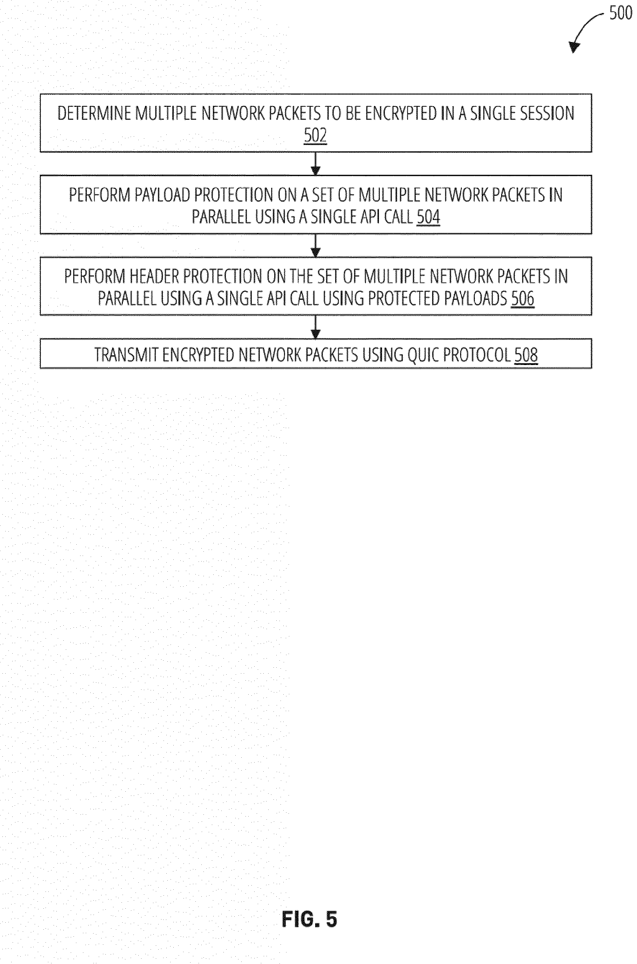

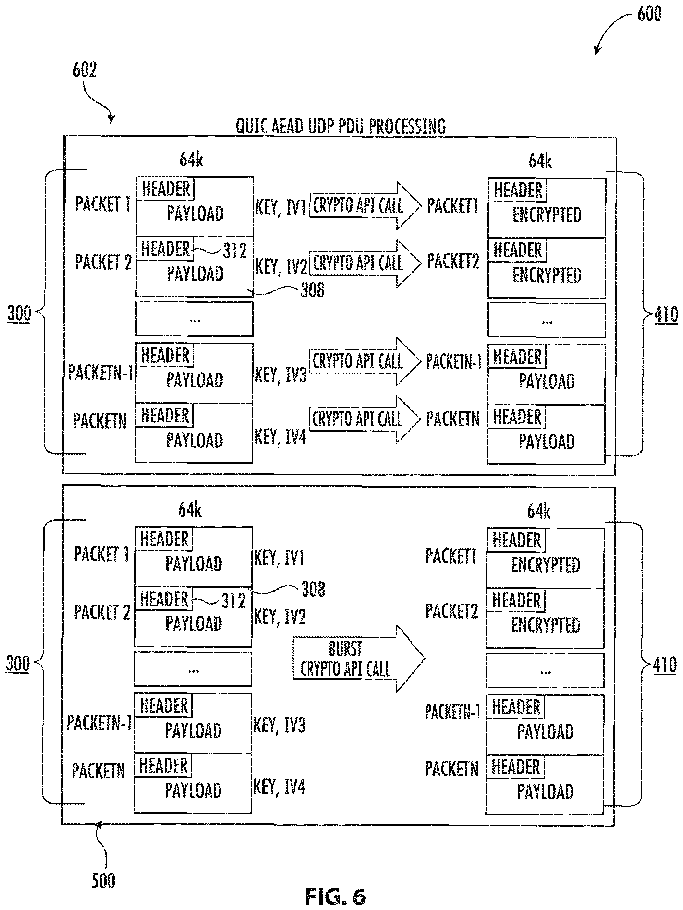

FIG. 5 illustrates a flowchart for batch mode protection 500 according to one or more embodiments. Although the example batch mode protection 500 depicts a particular sequence of operations, the sequence may be altered without departing from the scope of the present disclosure. For example, some of the operations depicted may be performed in parallel or in a different sequence that does not materially affect the function of the batch mode protection 500. In other examples, different components of an example device or system that implements the batch mode protection 500 may perform functions at substantially the same time or in a specific sequence. The description of the one or more operations of the batch mode protection 500 is provided with reference to FIG. 6.

According to some examples, the method includes determining multiple network packets to be encrypted in a single session at block 502. As described elsewhere herein, a single session can include a transfer of a data buffer larger than a predetermined length (e.g., 1 megabyte, 2 megabytes, etc.) using the QUIC protocol, which requires dividing the transmission into multiple network packets 300 that are to be transmitted by the communication device 200 to another communication device 200.

According to some examples, the method includes performing payload protection on a set of multiple network packets in parallel using a single API call at block 504. The set of network packets 300 can include two or more network packets 300. In some embodiments, N network packets 300 are encrypted in a single batch, where N ≥ 2. N can be a predetermined number that can be configured in some embodiments. The value of N can be based on the size (e.g., 64 kilobytes, 128 kilobytes, etc.) of a data buffer used to store the network packets 300.

FIG. 6 depicts a comparison between payload protection logic 600 performed using existing techniques of per-packet payload protection 602 and batch mode protection 500 according to one or more embodiments herein. The batch mode protection 500 processes multiple QUIC network packets 300 (e.g., N network packets, N≥2) under one single API call or function, which leads to a reduction in processor cycles required for crossing shared library boundaries. The single API call also incorporates QUIC-specific encryption parameters (IV and AAD size).

The QUIC payloads 308 and/or an indication of a payload, such as a memory address, location, identifier, etc., from each network packet 300 in the set of N network packets 300 being encrypted together (as a batch) are passed as input to the single API call. In addition, the QUIC key that is common to the N network packets 300 is passed to the API call. Further, the N count of IV values corresponding to the N network packets 300 are also passed as input to the API call. In some embodiments, the input parameters can be passed as pointers, e.g., addresses of memory locations where the values of the input parameters are stored.

The QUIC payloads 308 of the N network packets 300 are encrypted using the AEAD module 406 shown in the logic 400 in parallel. In other words, N protected payloads 410 corresponding to the input N network packets 300 are generated in parallel (e.g., batch mode) by the AEAD module 406. It should be noted that the QUIC headers 312 of the N network packets 300 are not encrypted at this stage.

As shown, in comparison, the per packet payload protection 602 requires N separate API calls for encrypting each of the N network packets 300. Each separate API call is input with respective QUIC payload 308 from each of the N network packets 300. In addition, each separate API call is input the QUIC key and respective IV for executing the encryption by the AEAD module 406.

Using the batch mode protection 500 allows for applying additional optimization techniques that are not possible in the traditional per-packet payload protection 602. The batch mode protection 500 facilitates multi-buffer processing where certain elements of AEAD encryption (e.g., AES-GCM) processing can be done in parallel on multiple network packets 300 at the same time. This includes but is not limited to AAD (additional authentication data) processing or final block encryption in AES-GMAC calculation (part of AES-GCM AEAD algorithm construct). In other words, the AEAD module 406 computes a single instance of the AAD for all the N network packets 300 that are input. Accordingly, AAD computation cycles are reduced. Additionally, the AEAD module 406 can execute the AES-GCM calculation only once across all the N network packets 300 (instead of N times in per packet payload protection 602 mode). Accordingly, the batch mode protection 500 facilitates performance improvement in comparison with the per packet payload protection 602. The multi-buffer processing can be used in several other operations during the batch mode protection 500.

Alternatively, or in addition, the batch mode protection 500 facilitates "function stitching" where compute elements of AEAD algorithm is performed on a first network packet 300 A can be combined, or interleaved, with different compute elements performed on a second network packet 300 B. If compute functions utilize different processor compute resources, the functions can be interleaved, thus improving performance. As an example, in the illustration of FIG. 6, the AAD calculation on network packet 2 could be interleaved with the final block encryption of packet 1, which is a predecessor of packet 2.

According to some examples, the method for batch mode protection 500 further includes performing header protection on the set of N network packets 300 in parallel using a single API call at block 506. The header protection uses the respective protected payloads 410 generated earlier in the process (block 504). As described elsewhere herein, the header protection generates a mask of a predetermined length for each network packet 300 using sampled data 704 from the protected payload 410 of each respective network packet 300. In the examples herein, a 5-byte mask is generated for a network packet 300 using a 16-byte sampled data 704 from the protected payload 410 corresponding to that network packet 300.

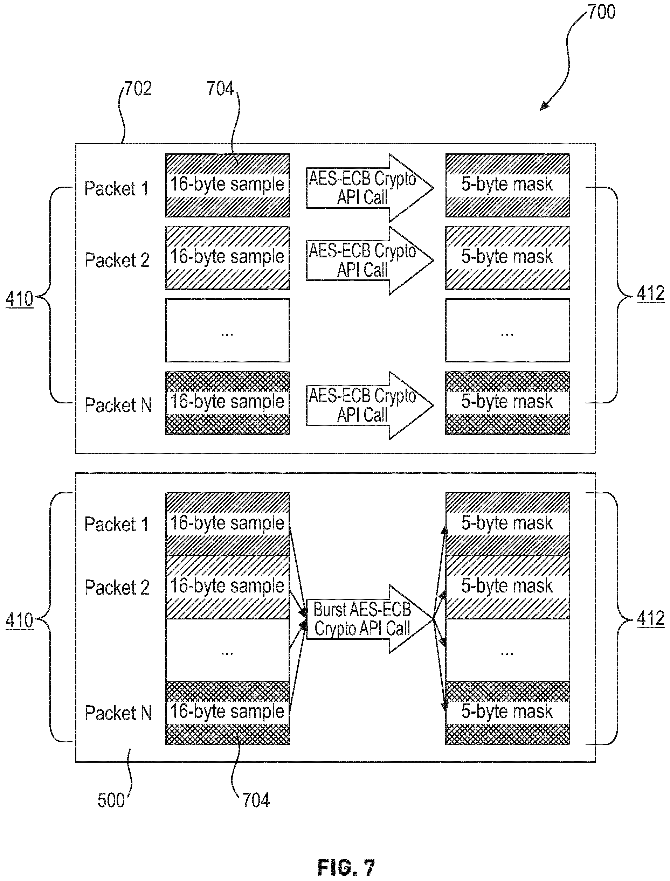

FIG. 7 depicts a comparison between header protection logic 700 performed using existing techniques of per-packet header protection 702 and batch mode protection 500 according to one or more embodiments herein. The batch mode protection 500 processes multiple QUIC network packets 300 (e.g., N network packets, N≥2) under one single API call or function, which leads to a reduction in processor cycles required for crossing shared library boundaries. The batch mode protection 500 uses a single AES-ECB encryption call to generate the protected header 412 (masked headers) for N network packets 300 instead of N separate AES-ECB encryption calls for each of the network packets 300.

The batch mode protection 500 includes computing the masks for multiple network packets 300 using corresponding 16-byte sampled data 704 simultaneously, rather than computing the protected headers 412 one by one for each network packet 300. Such batch mode processing may reduce the compute cost of crossing shared library boundary by calling the API just once per batch of N network packets 300 (instead of once per packet) and may also achieve higher throughput by leveraging the processing of multiple blocks in parallel, instead of processing one by one. The sampling of the protected payloads 410 can be performed using known techniques to randomly generate a predetermined length (e.g., 16-byte) of sampled data 704. The N sampled data 704 are input as a single data buffer to the single AES-ECB encryption call to generate a mask for protecting the header 412 (masked headers) for N network packets 300. For example, a 5-byte mask is generated that is XOR'ed against message header 412 to hide/obscure the header 412. The AES-ECB module 408 generates N 5-byte masked headers (412) as output.

In some embodiments, the encrypted network packets 300 are transmitted by the network interface controller 280 using the QUIC protocol at block 508.

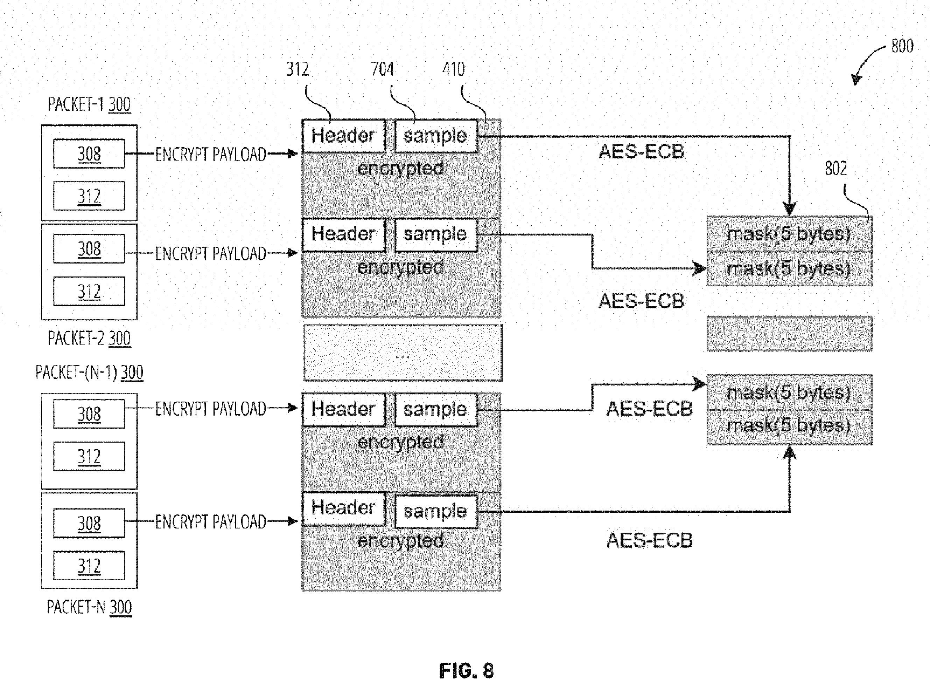

FIG. 8 illustrates an operational flow of batch encryption of packets 800 according to one or more embodiments. In the illustrated, N network packets 300 are to be transmitted using the QUIC protocol. The N network packets 300 can include portions of data (e.g., file, stream, etc.) that is divided into the N (or more) network packets 300. The N network packets 300 are encrypted in a batch using the techniques described herein. Each of the N network packets 300 includes a QUIC payload 308 and a QUIC header 312. The QUIC payloads 308 are first encrypted in parallel using a single function call (see FIG. 6) to generate corresponding N protected payloads 410. The encryption of the payloads can be performed using the AEAD module 406 using a common QUIC key. In some embodiments, separate IV values are provided for each of the N QUIC payloads 308.

Further, each of the N protected payloads 410 is sampled to obtain N sampled data 704 blocks; a sampled data 704 block corresponds to each network packet 300. The sampled data 704 blocks are used to generate corresponding header masks 802, one for each network packet 300.

The QUIC headers 312 of the N network packets 300 are subsequently encrypted in a batch. The encryption can be performed using the AES-ECB module 408. The QUIC headers 312 are protected by the AES-ECB module 408 by using the corresponding header masks 802, which are generated using the protected payloads 410. In some embodiments, the QUIC headers 312 are XORed using the corresponding header mask 802. Thus, the QUIC header 312 of packet-1 is masked using header mask 802 generated using QUIC payload 308 of the packet-1; the QUIC header 312 of packet-2 is masked using header mask 802 generated using QUIC payload 308 of the packet-2; and so on, until QUIC header 312 of packet-N is masked using header mask 802 generated using QUIC payload 308 of the packet-N.

Accordingly, the N network packets 300 are encrypted, including both QUIC headers 312 and QUIC payloads 308. The encrypted N network packets 300 are then transmitted as per QUIC protocol via the network 118.

Embodiments herein facilitate a processor circuitry comprising a memory interface and one or more processors coupled to the memory interface, where the one or more processors are configured to encrypt a plurality of network packets that are being communicated using the QUIC protocol. The network packets include a header section and a payload section. The encryption comprises the execution of a first instruction to encrypt the payloads of the plurality of network packets using a first key. The first key is used across (e.g., is common) the plurality of network packets. Further, the encryption comprises a second instruction to encrypt the headers of the plurality of network packets using a second key. The second key is used across (e.g., is common) the plurality of network packets.

In some embodiments, the second key used to encrypt a header of a first packet from the plurality of network packets is generated using a sampled subset of data from an encrypted payload of the first packet. In some embodiments, encrypting the header of the first packet is to mask the header using the second key. The masking can include an XOR operation.

In some embodiments, the first instruction to encrypt payloads of the plurality of network packets encrypts each payload independently in parallel.

In some embodiments, the first instruction to encrypt payloads of the plurality of network packets encrypts each payload by interleaving operations of encrypting a first packet with encrypting operations of a second packet.

In some embodiments, the encryption of the payloads and/or the encryption of the headers is offloaded to an accelerator 254. The accelerator 254 can be an accelerator device, a graphics processing unit (GPU), data processing unit (DPU), infrastructure processing unit (IPU), a smart NIC, one or more processors, or a combination thereof.

The components and features of the devices described above may be implemented using any combination of discrete circuitry, application-specific integrated circuits (ASICs), logic gates, and/or single-chip architectures. Further, the features of the devices may be implemented using microcontrollers, programmable logic arrays, and/or microprocessors, or any combination of the foregoing where suitably appropriate. It is noted that hardware, firmware, and/or software elements may be collectively or individually referred to herein as "logic" or "circuit."

It will be appreciated that the exemplary devices shown in the block diagrams described above may represent one functionally descriptive example of many potential implementations. Accordingly, division, omission, or inclusion of block functions depicted in the accompanying figures does not infer that the hardware components, circuits, software, and/or elements for implementing these functions would necessarily be divided, omitted, or included in embodiments.

At least one computer-readable storage medium may include instructions that, when executed, cause a system to perform any of the computer-implemented methods described herein.

Some embodiments may be described using the expression "one embodiment" or "an embodiment" along with their derivatives. These terms mean that a particular feature, structure, or characteristic described in connection with the embodiment is included in at least one embodiment. The appearances of the phrase "in one embodiment" in various places in the specification are not necessarily all referring to the same embodiment. Moreover, unless otherwise noted, the features described above are recognized to be usable together in any combination. Thus, any features discussed separately may be employed in combination with each other unless it is noted that the features are incompatible with each other.

With general reference to notations and nomenclature used herein, the detailed descriptions herein may be presented in terms of program procedures executed on a computer or network of computers. These procedural descriptions and representations are used by those skilled in the art to most effectively convey the substance of their work to others skilled in the art.

A procedure is here, and generally, conceived to be a self-consistent sequence of operations leading to a desired result. These operations are those requiring physical manipulations of physical quantities. Usually, though not necessarily, these quantities take the form of electrical, magnetic, or optical signals capable of being stored, transferred, combined, compared, and otherwise manipulated. It proves convenient at times, principally for reasons of common usage, to refer to these signals as bits, values, elements, symbols, characters, terms, numbers, or the like. It should be noted, however, that all of these and similar terms are to be associated with the appropriate physical quantities and are merely convenient labels applied to those quantities.

Further, the manipulations performed are often referred to in terms such as adding or comparing, which are commonly associated with mental operations performed by a human operator. No such capability of a human operator is necessary, or desirable in most cases, in any of the operations described herein, which form part of one or more embodiments. Rather, the operations are machine operations. Useful machines for performing operations of various embodiments include general-purpose digital computers or similar devices.

Some embodiments may be described using the expression "coupled" and "connected" along with their derivatives. These terms are not necessarily intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other but yet still cooperate or interact with each other.

Various embodiments also relate to apparatus or systems for performing these operations. This apparatus may be specially constructed for the required purpose, or it may comprise a general-purpose computer as selectively activated or reconfigured by a computer program stored in the computer. The procedures presented herein are not inherently related to a particular computer or other apparatus. Various general-purpose machines may be used with programs written in accordance with the teachings herein, or it may prove convenient to construct more specialized apparatus to perform the required methods. The required structure for a variety of these machines will appear from the description given.

What has been described above includes examples of the disclosed architecture. It is, of course, not possible to describe every conceivable combination of components and/or methodologies, but one of ordinary skill in the art may recognize that many further combinations and permutations are possible. Accordingly, the novel architecture is intended to embrace all such alterations, modifications, and variations that fall within the spirit and scope of the appended claims.

The various elements of the devices as previously described with reference to FIGS. 1-8 may include various hardware elements, software elements, or a combination of both. Examples of hardware elements may include devices, logic devices, components, processors, microprocessors, circuits, processors, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chipsets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. However, determining whether an embodiment is implemented using hardware elements and/or software elements may vary in accordance with any number of factors, such as desired computational rate, power levels, heat tolerances, processing cycle budget, input data rates, output data rates, memory resources, data bus speeds, and other design or performance constraints, as desired for a given implementation.

One or more aspects of at least one embodiment may be implemented by representative instructions stored on a machine-readable medium which represents various logic within the processor, which, when read by a machine, causes the machine to fabricate logic to perform the techniques described herein. Such representations, known as "IP cores," may be stored on a tangible, machine-readable medium and supplied to various customers or manufacturing facilities to load into the fabrication machines that make the logic or processor. Some embodiments may be implemented, for example, using a machine-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

It will be appreciated that the exemplary devices shown in the block diagrams described above may represent one functionally descriptive example of many potential implementations. Accordingly, division, omission or inclusion of block functions depicted in the accompanying figures does not infer that the hardware components, circuits, software and/or elements for implementing these functions would necessarily be divided, omitted, or included in embodiments.

At least one computer-readable storage medium may include instructions that, when executed, cause a system to perform any of the computer-implemented methods described herein.

Some embodiments may be described using the expression "one embodiment" or "an embodiment" along with their derivatives. These terms mean that a particular feature, structure, or characteristic described in connection with the embodiment is included in at least one embodiment. The appearances of the phrase "in one embodiment" in various places in the specification are not necessarily all referring to the same embodiment. Moreover, unless otherwise noted the features described above are recognized to be usable together in any combination. Thus, any features discussed separately may be employed in combination with each other unless it is noted that the features are incompatible with each other.

The following examples pertain to further embodiments, from which numerous permutations and configurations will be apparent.

Example 1 includes an apparatus that includes an interface to memory, and a processor to execute one or more instructions. The instructions cause the processor to receive, via an application programming interface (API), indications of a plurality of packets, respective packets of the plurality of packets comprising a respective header and a respective payload. Further, the instructions cause the processor to determine, by a QUIC protocol stack, to encrypt the plurality of packets in parallel. Further, the instructions cause the processor to encrypt the payloads of the plurality of packets in parallel. Further, the instructions cause the processor to encrypt the headers of the plurality of packets in parallel.

In example 2, the apparatus further includes an accelerator device, wherein the processor causes the payloads to be encrypted using the accelerator device.

In example 3, the processor causes the headers to be encrypted using the accelerator device.

In example 4, the accelerator device is a hardware accelerator, a graphics processing unit (GPU), a data processing unit (DPU), an infrastructure processing unit (IPU), or a network interface controller (NIC).

In example 5, the payloads of the plurality of packets are encrypted in parallel using a common key.

In example 6, the headers of the plurality of packets are encrypted in parallel using respective masks.

In example 7, the respective masks used to encrypt the headers are generated based on encrypted payloads of the respective plurality of packets.

Example 8 includes a non-transitory computer-readable storage medium comprising one or more instructions, which when executed by one or more processors cause the one or more processors to perform one or more operations. The one or more processors receive, via an application programming interface (API), indications of a plurality of packets, respective packets of the plurality of packets comprising a respective header and a respective payload. The one or more processors determine, by a QUIC protocol stack, to encrypt the plurality of packets in parallel. The one or more processors encrypt payloads of the plurality of packets in parallel. The one or more processors encrypt headers of the plurality of packets in parallel.

In example 9, the one or more processors cause the payloads to be encrypted using an accelerator device.

In example 10, the one or more processors cause the headers to be encrypted using the accelerator device.

In example 11, the accelerator device is a hardware accelerator, a graphics processing unit (GPU), a data processing unit (DPU), an infrastructure processing unit (IPU), or a network interface controller (NIC).

In example 12, the payloads of the plurality of packets are encrypted in parallel using a common key.

In example 13, the headers of the plurality of packets are encrypted in parallel using respective masks.

In example 14, the respective masks used to encrypt the headers are generated based on encrypted payloads of the respective plurality of packets.

Example 15 includes a computer-implemented method. The method includes receiving, by a processor, indications of a plurality of packets to be transmitted, respective packets of the plurality of packets comprising a header and a payload. The method further includes causing, by the processor, encryption of the plurality of packets. The encryption comprises encrypting payloads of the plurality of packets in parallel and encrypting headers of the plurality of packets in parallel.

In example 16, the encrypting the payloads of the plurality of packets in parallel comprises a single function call.

In example 17, the encrypting the headers of the plurality of packets in parallel comprises a single function call.

In example 18, the payloads of the plurality of packets are encrypted in parallel using a common key.

In example 19, the headers of the plurality of packets are encrypted in parallel using respective masks.

In example 20, the respective masks used to encrypt the headers are generated based on encrypted payloads of the respective plurality of packets.

It is emphasized that the Abstract of the Disclosure is provided to allow a reader to quickly ascertain the nature of the technical disclosure. It is submitted with the understanding that it will not be used to interpret or limit the scope or meaning of the claims. In addition, in the foregoing Detailed Description, it can be seen that various features are grouped together in a single embodiment for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separate embodiment. In the appended claims, the terms "including" and "in which" are used as the plain-English equivalents of the respective terms "comprising" and "wherein," respectively. Moreover, the terms "first," "second," "third," and so forth, are used merely as labels, and are not intended to impose numerical requirements on their objects.

The foregoing description of example embodiments has been presented for the purposes of illustration and description. It is not intended to be exhaustive or to limit the present disclosure to the precise forms disclosed. Many modifications and variations are possible in light of this disclosure. It is intended that the scope of the present disclosure be limited not by this detailed description, but rather by the claims appended hereto. Future filed applications claiming priority to this application may claim the disclosed subject matter in a different manner and may generally include any set of one or more limitations as variously disclosed or otherwise demonstrated herein.

## Claims

1. A computer-implemented method comprising:
receiving, by a processor, indications of a plurality of packets to be transmitted, respective packets of the plurality of packets comprising a header and a payload; and
causing, by the processor, encryption of the plurality of packets, the encryption comprising:
encrypting payloads of the plurality of packets in parallel; and
encrypting headers of the plurality of packets in parallel.

2. The computer-implemented method of claim 1, wherein the processor causes the payloads to be encrypted using an accelerator device.

3. The computer-implemented method of claim 2, wherein the processor causes the headers to be encrypted using the accelerator device.

4. The computer-implemented method of claim 2 or 3, wherein the accelerator device is a hardware accelerator, a graphics processing unit (GPU), a data processing unit (DPU), an infrastructure processing unit (IPU), or a network interface controller (NIC).

5. The computer-implemented method of claim 1 or 2, wherein the encrypting the headers of the plurality of packets in parallel comprises a single function call.

6. The computer-implemented method of claim 1 or 2, wherein the payloads of the plurality of packets are encrypted in parallel using a common key.

7. The computer-implemented method of claim 1 or 2, wherein the headers of the plurality of packets are encrypted in parallel using respective masks.

8. The computer-implemented method of claim 7, wherein the respective masks used to encrypt the headers are generated based on encrypted payloads of the respective plurality of packets.

9. An apparatus comprising means to perform a method as claimed in any preceding claim.

10. A computer program comprising instructions which, when the program is executed by a computer, cause the computer to carry out the method as claimed in any preceding claim.

11. Machine-readable storage including machine-readable instructions, when executed, to implement a method or realize an apparatus as claimed in any preceding claim.
